# EUROPÄISCHE PATENTSCHRIFT

(11) **EP 2 457 536 B1**
(45) Veröffentlichungstag und Bekanntmachung des Hinweises auf die Patenterteilung: **16.08.2017**
(21) Anmeldenummer: 11186800.6
(22) Anmeldetag: 26.10.2011
(51) Int. Cl.: A61C 9/00, A61C 8/00

(54) **Scankörper zur Bestimmung einer Positionierung und Orientierung eines Dentalimplantates**
Scan body for determining a position and orientation of a dental implant
Corps de balayage pour détermination de la position et de l'orientation d'un implant dentaire

(30) Priorität: 29.11.2010 DE 102010062105
(43) Veröffentlichungstag der Anmeldung: 30.05.2012
(73) Patentinhaber: nt-trading GmbH & Co. KG, 76187 Karlsruhe (DE)
(72) Erfinder: Jahn, Dirk, 67433 Neustadt (DE)
(74) Vertreter: Patentanwälte Ruff, Wilhelm, Beier, Dauster & Partner mbB

(56) Entgegenhaltungen:
- EP-A1- 0 776 183
- EP-A2- 1 920 730
- WO-A2-2010/108919

## Beschreibung

Die Erfindung betrifft einen Scankörper zur Bestimmung einer Positionierung und Orientierung eines Dentalimplantates mit einem mit dem Implantat verbindbaren Fußteil, sowie mit einem dreidimensionalen Scanbereich, der für eine eindeutige Erfassung seiner Oberfläche aus verschiedenen Scanperspektiven relativ zu einer Mittellängsachse des Scankörpers eine unsymmetrische Geometrie aufweist, wobei zwischen dem Fußteil und dem Scanbereich ein vom Fußteil und vom Scanbereich abgesetzter Übergangsbereich vorgesehen ist, wobei der Übergangsbereich vom Fußteil stufenförmig abgesetzt ist, und wobei der Scanbereich eine Umfangsmantelfläche aufweist, die rotationssymmetrisch zu der Mittellängsachse gestaltet ist.

Ein derartiger Scankörper ist aus der WO 2010/108919 A2 bekannt. Der bekannte Scankörper weist einen Fußteil auf, der mit einem Implantat verbindbar ist. Zudem ist der Scankörper mit einer zylindrischen Umfangsmantelfläche versehen, die mittels eines konischen Übergangsbereiches von dem Fußteil relativ zu einer Mittellängsachse des Scankörpers radial nach außen abgesetzt ist. Der Scanbereich weist auf gegenüberliegenden Seiten zwei ebene Scankonturabschnitte auf, die identisch zueinander gestaltet sind.

Ein weiterer Scankörper ist aus der EP 2 218 423 A1 bekannt. Der bekannte Scankörper ist einteilig gestaltet und weist ein Fußteil auf, das direkt oder indirekt über einen Adapter mit einem Dentalimplantat verbindbar ist. Der Scankörper weist an seiner Oberseite einen dreidimensionalen Scanbereich auf, der mit mehreren, zueinander winklig ausgerichteten, ebenen Flächen versehen ist, die dreieckförmig oder fünfeckförmig gestaltet sind.

Aufgabe der Erfindung ist es, einen Scankörper der eingangs genannten Art zu schaffen, der einen Scanvorgang aus allen Scanperspektiven mit hoher Genauigkeit ermöglicht.

Diese Aufgabe wird durch die Merkmale des Patentanspruches 1 gelöst. Durch die erfindungsgemäße Lösung ist der Scanbereich durch Zwischenfügen eines Übergangsbereiches zwischen Fußteil und Scanbereich ausreichend weit zu dem Fußteil und damit auch zu einem entsprechenden Implantat beabstandet, um Scanvorgänge aus jeder Perspektive zu ermöglichen. Zudem gewährleisten auch die radial über die Außenkontur des Übergangsbereiches hinaus abragenden und unterschiedlich gestalteten Scankonturabschnitte ein exaktes Erfassen des Scankörpers aus allen Scanperspektiven. Durch die radiale Aufweitung gegenüber dem Übergangsbereich erhält der Scanbereich ein großes Volumen und demzufolge eine große Oberfläche, die besonders exakte Messungen ermöglicht. Dadurch ist es in besonders guter Weise möglich, die Ausrichtung der Mittellängsachse des Dentalimplantates in allen drei Raumrichtungen exakt zu bestimmen. Das exakt ermittelte, dreidimensionale Scanergebnis wird mit Originaldaten des Scankörpers aus einer elektronischen Speicherbibliothek verglichen. Durch diesen Vergleich ist die Ausrichtung des Implantates insbesondere auch in Relation zum Zahnfleisch, zu benachbarten Zähnen, zum Kieferabschnitt oder zu benachbarten Zahnprothesen oder Implantaten besonders exakt bestimmbar. Hierdurch können die auf den Ergebnissen des Scanvorganges basierenden Gestaltungen von Abutments und Zahnprothesen besonders exakt und individuell angepasst werden. Die hohe Genauigkeit des Scanvorganges bewirkt zwangsläufig auch hohe Genauigkeiten bei der anschließenden individuellen Gestaltung von Abutments und Zahnprothesen, da diese auf die Scanergebnisse aufbaut. Durch die erfindungsgemäße Lösung ist es möglich, Scanvorgänge des Scankörpers nicht nur von oben oder von der Seite her durchzuführen, sondern auch schräg von unten. Dies ist besonders vorteilhaft, da bei einem direkten Scannen des Scankörpers in einem Mundbereich eines Patienten häufig eine schlechte Zugänglichkeit vorhanden ist. Dadurch, dass der Scankörper auch von unten gescannt werden kann, ist sichergestellt, dass immer eine eindeutige und dreidimensionale Erfassung des Scankörpers und der Umgebung im Mundbereich möglich ist. Selbstverständlich hat der Scankörper auch Vorteile bei einem Scanvorgang eines Zahnreihenmodells mit entsprechend vorbereitetem Dentalimplantat. Erfindungsgemäß ist der an den Fußteil axial anschließender Übergangsbereich vorgesehen, an den axial gegenüberliegend zu dem Fußteil der Scanbereich anschließt, dessen Umfang gegenüber dem Übergangsbereich radial erweitert ist. Der Scankörper besteht vozugsweise aus einem scanbaren Kunststoffmaterial, insbesondere einem thermoplastischen Kunststoff. Besonders vorteilhaft wird der Scankörper aus Poly-Etherketon (PEEK) hergestellt.

In Ausgestaltung der Erfindung ist der Scanbereich an seiner Umfangsmantelfläche mit - auf die Mittellängsachse bezogen - radial gegenüber der Umfangsmantelfläche nach außen und nach innen versetzten Scankonturabschnitten versehen.

In weiterer Ausgestaltung der Erfindung ist der Scanbereich an seiner Umfangsmantelfläche mit Scankonturabschnitten in Form von radial nach außen abragenden Scanprofilierungen und in Form von radial nach innen versetzten Scanflächen versehen. Die Scanflächen sind vorzugsweise eben gestaltet. Die Scanprofilierungen sind radial nach außen erhaben ausgeführt.

In weiterer Ausgestaltung der Erfindung weisen die Scanprofilierungen und die Scanflächen Längsorientierungen auf, die parallel zu der Mittellängsachse des Scankörpers verlaufen. Da die Mittellängsachse des Scankörpers zwangsläufig auch die Mittellängsachse des Dentalimplantates definiert, kann durch die Erfassung der Scanprofilierungen und Scanflächen ein Rückschluss auf die Lage der Mittellängsachse des Dentalimplantates gezogen werden.

In weiterer Ausgestaltung der Erfindung ist die Umfangsmantelfläche zylindrisch koaxial zu der Mittellängsachse gestaltet, wobei ein Zylinderdurchmesser größer ist als ein Durchmesser des Übergangsbereiches. Auch diese Ausgestaltung trägt zur einfachen Bestimmung der Positionierung und Orientierung des Dentalimplantates bei.

In weiterer Ausgestaltung der Erfindung weisen die Scanprofilierungen eine radial nach außen abragende Nockenform auf. Vorzugsweise weisen entsprechende Nocken unterschiedliche axiale Längen und Breiten auf. Es ist auch möglich, dass die Nocken entweder unterschiedliche axiale Längen oder unterschiedliche axiale Breiten aufweisen. Die Nocken weisen über ihre gesamte Länge den gleichen Querschnitt auf. Die Nocken weisen vorzugsweise einen konvex gewölbten Querschnitt auf.

In weiterer Ausgestaltung der Erfindung ist eine dem Fußteil gegenüberliegende Stirnseite des Scanbereiches eben gestaltet und in einer Radialebene zur Mittellängsachse ausgerichtet. Der Scanbereich weist vorzugsweise eine zylindrische Grundform auf, wobei die Stirnseite entsprechend einer Zylinderstirnseite ausgeführt ist.

In weiterer Ausgestaltung der Erfindung weisen die nockenförmigen Scanprofilierungen unterschiedliche axiale Längen und/oder Breiten und/oder Radialerstreckungen auf. Dadurch ist eine eindeutige Zuordnung des Scanbereiches im dreidimensionalen Raum ermöglicht.

In weiterer Ausgestaltung der Erfindung sind die Scanflächen eben gestaltet. Die ebene Gestaltung gilt für den großflächigen Bereich der Scanflächen. Randbereiche der Scanflächen sind vorzugsweise konkav gekrümmt gestaltet oder bilden direkt Kanten zur Umfangsmantelfläche.

In weiterer Ausgestaltung der Erfindung weisen die beiden einander diametral gegenüberliegenden Scanflächen unterschiedliche axiale Längen und/oder Breiten auf. Die Ausrichtung der Scankörper ist somit eindeutig bestimmbar.

In weiterer Ausgestaltung der Erfindung ist die in der Radialebene liegende Stirnseite des Scanbereiches mit einer Einschrauböffnung zur Befestigung des Scankörpers am Implantat oder einem mit dem Implantat verbundenen Adapter versehen. Dadurch ist eine einfache Fixierung des Scankörpers am Dentalimplantat oder einem mit dem Implantat verbundenen Adapter ermöglicht.

In weiterer Ausgestaltung der Erfindung ist der Übergangsbereich zylindrisch gestaltet. Die zylindrische Gestaltung ist vorzugsweise koaxial zur Mittellängsachse des Scankörpers vorgenommen, so dass auch der Übergangsbereich selbst bereits Rückschlüsse auf die Lage der Mittellängsachse des Dentalimplantates zulässt. Dadurch, dass der Übergangsbereich einen geringeren Durchmesser aufweist als der Scanbereich, kann auch bei einem Blickwinkel, d.h. einem Scanvorgang von unten her, der Übergangsbereich den Scanbereich nicht verdecken. Der Scanbereich ist vielmehr auch in dieser Scanansicht von unten eindeutig erkennbar und bestimmbar.

In weiterer Ausgestaltung der Erfindung ist der Übergangsbereich vom Fußteil ausgehend zu dem Scanbereich hin erweitert. Die Erweiterung ist vorzugsweise stetig und in besonders vorteilhafter Weise konisch ausgeführt.

Weitere Vorteile und Merkmale der Erfindung ergeben sich aus den Ansprüchen. Nachfolgend ist ein bevorzugtes Ausführungsbeispiel der Erfindung beschrieben und anhand der Zeichnungen dargestellt.
- Fig. 1: zeigt in perspektivischer Darstellung eine Ausführungsform eines erfindungsgemäßen Scankörpers,
- Fig. 2: in vergrößerter Seitenansicht den Scankörper nach Fig. 1,
- Fig. 3: den Scankörper nach Fig. 2 in einer um 90° verdrehten Seitenansicht,
- Fig. 4: einen Längsschnitt durch den Scankörper nach den Fig. 1 bis 3,
- Fig. 5: eine Ansicht des Scankörpers nach den Fig. 1 bis 4 von unten,
- Fig. 6: den Scankörper nach den Fig. 1 bis 5 in einer Ansicht von oben und
- Fig. 7 bis 12: verschiedene Ausführungsformen erfindungsgemäßer Scankörper ähnlich Fig. 1.

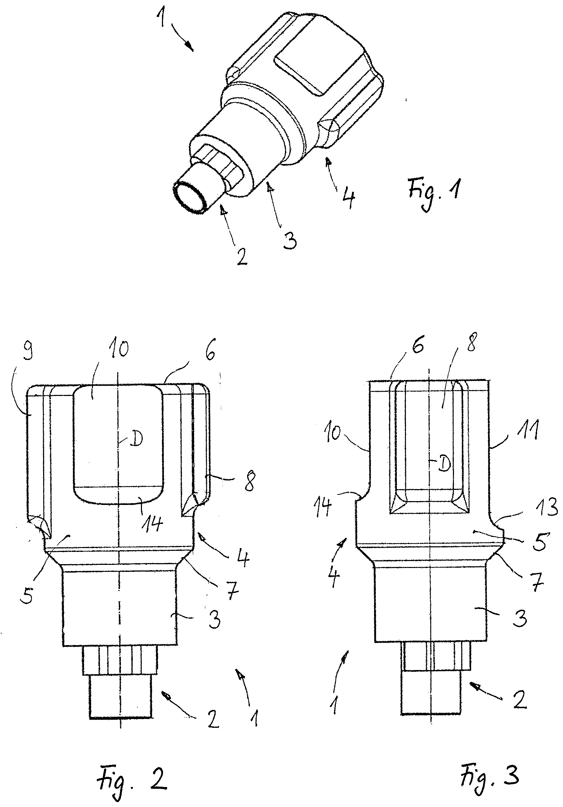

Ein Scankörper 1 nach den Fig. 1 bis 6 ist als einteiliges Kunststoffbauteil gestaltet, das aus dem thermoplastischen Kunststoff PEEK (Poly-EtherEtherKeton) hergestellt ist. Der Scankörper 1 wird zur Bestimmung einer Positionierung und Orientierung eines Dentalimplantates in einem Kieferbereich eines Patienten eingesetzt. Die Bestimmung der Positionierung und Orientierung des Dentalimplantates dient dazu, individuelle Abutments zu planen sowie individuell gefertigte Zahnprothesen zu schaffen. Mittels entsprechender Scanvorgänge, die intraoral im Mundbereich eines Patienten vorgenommen werden können, ist der Scankörper exakt dreidimensional erfassbar. Alternativ können die Scanvorgänge extraoral an einem Planungs- oder Arbeitsmodell für einen Patienten vorgenommen werden. In beiden Fällen ist auch eine exakte, dreidimensionale Zuordnung des Scankörpers zu der Umgebung im Kieferbereich (Mund oder Modell) wie benachbarten Zähnen, Kieferabschnitten, Dentalimplantaten, Zahnfleisch und ähnliches ermöglicht. Der erfindungsgemäße Scankörper 1 ist aus jeder Richtung vollständig dreidimensional bestimmbar und zuordenbar. Der Scankörper 1 wird entweder direkt mit dem Dentalimplantat oder aber mit einem Adapter des Dentalimplantates verbunden. Nach Abschluss des Scanvorganges wird der Scankörper 1 wieder entnommen. Die über den Scanvorgang ermittelten, elektronischen Daten werden ausgewertet und zur Planung sowie zur individuellen Gestaltung eines Abutments oder einer Zahnprothese verwendet.

Der Scankörper 1 weist einen Fußteil 2 auf, der in eine Oberseite des Dentalimplantates oder in einen Adapter des Dentalimplantates einsetzbar und durch Verschraubung dort fixierbar ist. Der Fußteil 2 weist nicht nähere bezeichnete Drehsicherungen auf, die eine verdrehfeste Positionierung des Scankörpers 1 relativ zum Dentalimplantat ermöglichen. An den den unteren Endabschnitt des Scankörpers 1 bildenden Fußteil 2 schließt ein zylindrischer Übergangsbereich 3 an, der koaxial zu einer Mittellängsachse D des Scankörpers 1 gestaltet ist. Der Durchmesser des zylindrischen Übergangsbereiches 3 ist gegenüber dem im Wesentlichen zylindrischen Fußteil 2 stufenförmig vergrößert. Dem als Steckabschnitt gestalteten Fußteil 2 sind nockenförmige Drehsicherungselemente zugeordnet, die radial vom Fußteil 2, das zylindrisch ausgeführt ist, nach außen abragen. Auch im Bereich der Drehsicherungselemente ist der Durchmesser des Fußteils 2 geringer als der des Übergangsbereiches 3. An den Übergangsbereich 3 schließt zu einer dem Fußteil 2 gegenüberliegenden Stirnseite 6 hin ein großvolumiger Scanbereich 4 an, der sich etwa über die Hälfte der Länge des Scankörpers 2 - auf die Mittellängsachse D bezogen - erstreckt. Der Scanbereich 4 weist einen zylindrischen Grundmantel 5 auf, der koaxial zur Mittellängsachse D ausgerichtet ist und einen größeren Durchmesser besitzt als der Übergangsbereich 3. Der Grundmantel 5 stellt eine Umfangsmantelfläche des Scankörpers 1 im Sinne der Erfindung dar. Der Grundmantel 5 wird in seiner axialen Länge nach oben, d.h. von dem Übergangsbereich 3 weg, durch die Stirnseite 6 begrenzt, die als ebene Stirnfläche gestaltet ist, die in einer Radialebene zur Mittellängsachse D ausgerichtet ist. Der Grundmantel 5 weist insgesamt vier über seinen Umfang gleichmäßig verteilt angeordnete Scanabschnitte 8 bis 11 auf, von denen zwei als nockenförmige Scanprofilierungen 8, 9 und die beiden anderen als radial nach innen versetzte, im Wesentlichen ebene Scanflächen 10, 11 gestaltet sind. Die nockenförmigen Scanprofilierungen 8, 9 erstrecken sich in Längsrichtung des Scankörpers 1 und weisen damit eine zu der Mittellängsachse D parallele Erstreckung auf. Die beiden Scanprofilierungen 8, 9 schließen oben unmittelbar an die Stirnseite 6 an und erstrecken sich nach unten über mehr als die Hälfte der Länge des Scanbereiches 5. Die Scanprofilierung 9 ist etwa um 10 bis 20% länger gestaltet als die Scanprofilierung 8. Beide Scanprofilierungen 8, 9 ragen radial von dem Grundmantel 5 nach außen ab. Eine Breite der Scanprofilierung 8 - in Umfangsrichtung des Scanbereiches 5 gesehen - ist wesentlich größer als eine Breite der Scanprofilierung 9. Die beiden Scanprofilierungen 8, 9 liegen einander diametral gegenüber. Rechtwinklig hierzu liegen auch die beiden radial nach innen versetzten Scanflächen 10, 11 einander derart diametral gegenüber, dass die ebenen Flächenabschnitte der Scanflächen 10, 11 parallel zueinander und parallel zur Mittellängsachse D ausgerichtet sind. Die Scanabschnitte 8 bis 11 sind gleichmäßig über den Umfang des Grundmantels 5 verteilt angeordnet, so dass benachbarte Scanabschnitte 8 bis 11 jeweils in einem Winkel von 90° - in Umfangsrichtung gesehen - zueinander ausgerichtet sind.

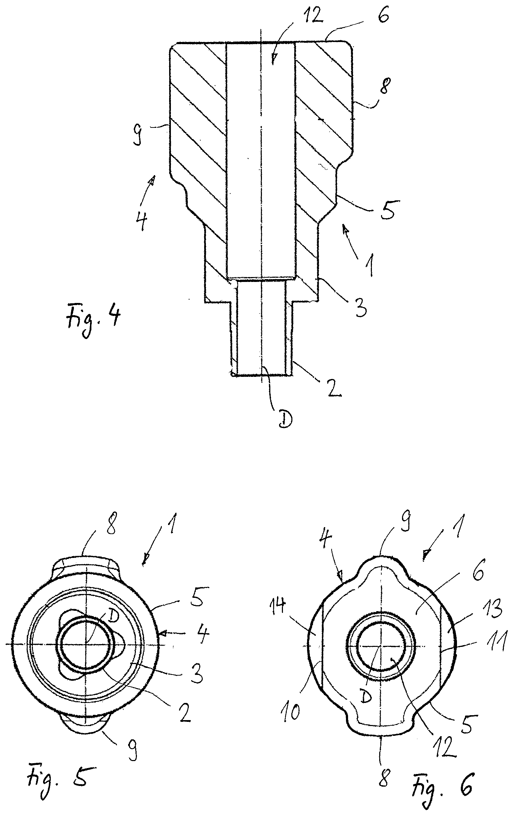

Der Scankörper 1 stellt einen massiven Kunststoffkörper dar, der lediglich in seiner Mitte mit einer gestuften Durchgangsbohrung 12 (Fig. 4) versehen ist, die auch als Einschraubbohrung bezeichnet wird. Diese Durchgangsbohrung dient zur Aufnahme einer Schraube, die den Scankörper 1 im Dentalimplantat oder in einem zugeordneten Adapter lösbar fixiert.

Die beiden nockenförmigen Scanprofilierungen 8, 9 sind an ihren Eckbereichen mit großen Radien versehen, so dass sich konvexe Rundungen ergeben. Die breite Scanprofilierung 8 weist einen etwa rechteckigen Querschnitt auf. Die schmale Scanprofilierung 9 weist einen etwa halbkreisförmigen Querschnitt auf.

Die gegenüberliegenden, ebenen Scanflächen 10, 11 sind gegenüber einer Außenmantelfläche des Grundmantels 5 radial nach innen versetzt und schließen über die Radien 13, 14 im Bereich jeder Scanfläche 10, 11 und im Bereich einer Unterseite jeder Scanfläche 10, 11, die dem Übergangsbereich 3 zugewandt ist, an die Außenmantelfläche des Grundmantels 5 an. Die Radien 13, 14 sind als konkave Rundungen gestaltet. Zu gegenüberliegenden Längsseiten jeder Scanfläche 10, 11 hin sind die ebenen Flächenabschnitte bis zur Außenkontur des Grundmantels 5 geführt und gehen dort mittels einer Kante in die entsprechende Außenkonturfläche über, wie der Fig. 6 zu entnehmen ist. Anhand der Fig. 1 bis 6 ist erkennbar, dass der Scankörper 1 aus jeder beliebigen Perspektive eine andere, dreidimensional exakt bestimmte und einzigartige Ansicht bietet, die sich von jeder Ansicht aus einer beliebigen anderen Perspektive unterscheidet. Dadurch ist es möglich, den Scankörper 1 im dreidimensionalen Raum und damit auch im Mundbereich eines Patienten oder im Bereich eines Kiefermodells exakt dreidimensional zu bestimmen und demzufolge auch die Umgebung mit Abständen, Orientierung und Ausrichtungen exakt zu definieren.

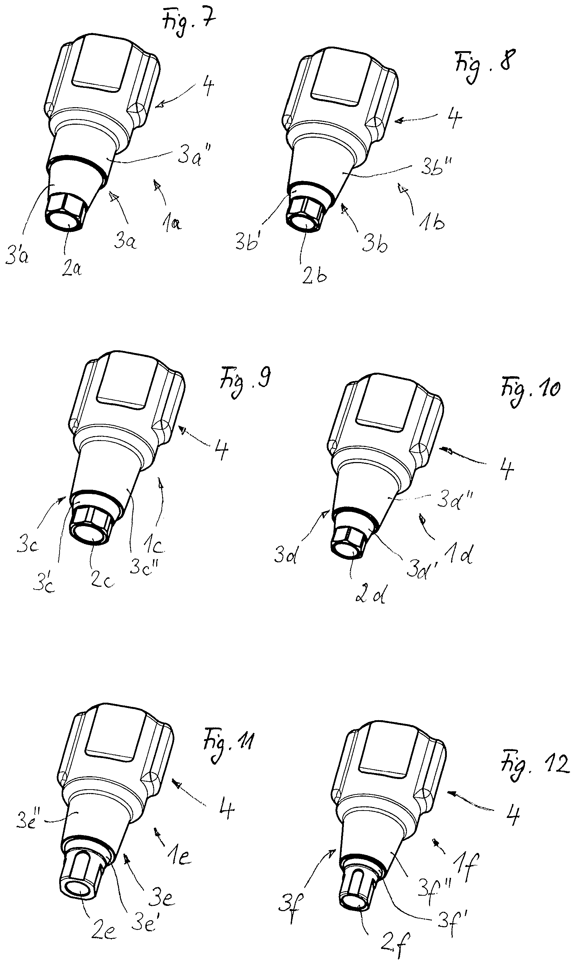

Die Scankörper 1a bis 1f nach den Fig. 7 bis 12 weisen Scanbereiche 4 auf, die identisch zu dem Scanbereich 4 des Scankörpers 1 nach den Fig. 1 bis 6 gestaltet sind. Zur Vermeidung von Wiederholungen wird daher auf die Beschreibung zu der Ausführungsform nach den Fig. 1 bis 6 verwiesen. Wesentliche Unterschiede bei den Scankörpern 1a bis 1f sind es, dass zum einen die Fußteile 2a bis 2f an unterschiedlich gestaltete Einsetzbereiche von verschiedenen Ausführungen von Dentalimplantaten angepasst sind. Die Fußteile 2a bis 2d weisen demgemäß ein Sechskantprofil auf. Die Fußteile 2e und 2f hingegen sind mit einer Nut/Federprofilierung ausgeführt.

Die Übergangsbereiche 3a bis 3f sind bei allen Scankörpern 1a bis 1f in Axialrichtung abgestuft ausgeführt. Zumindest ein Teilbereich des jeweiligen Übergangsbereiches 3a bis 3f ist derart konisch erweitert gestaltet, dass dieser Teilbereich sich von seiner dem jeweiligen Fußteil 2a bis 2f zugewandten Stirnrand her zu dem Scanbereich 4 hin stetig, nämlich konisch, erweitert. Der zweite Teilbereich kann entweder ebenfalls konisch erweitert oder aber zylindrisch gestaltet sein. Bei der Ausführungsform nach Fig. 7 ist der dem Fußteil 2a zugewandte untere Teilbereich 3'a konisch erweitert ausgeführt. Der zum Scanbereich 4 hin axial nach oben anschließende Teilbereich 3a" des Übergangsbereiches 3a hingegen ist zylindrisch ausgeführt, wobei sein Durchmesser gegenüber dem konischen Teilbereich 3'a stufenartig erweitert ist. Bei der Ausführungsform nach Fig. 8 weist der Scanköper 1 b zwei konische Teilbereiche 3b' 3b" auf, die mittels eines Stufenabsatzes ineinander übergehen. Der untere konische Teilbereich 3b' setzt an dem Fußteil 2b an. Der zweite axial nach oben anschließende konische Teilbereich 3b" erweitert sich zum Scanbereich 4 hin. Der Scankörper 1 c nach Fig. 9 weist - wie die Ausführungsform nach Fig. 8 - ebenfalls zwei konische Teilbereiche 3'c, 3c" im Übergangsbereich 3c auf, die mittels eines Stufenabsatzes aneinander anschließen. Gleiches gilt für den Scankörper 1 d nach Fig. 10 mit dem Unterschied, dass der untere, konisch erweiterte Teilbereich 3d' gegenüber den unteren Teilbereichen 3b', 3'c nach den Fig. 8 und 9 eine geringfügig größere axiale Länge aufweist.

Bei den Ausführungsformen nach den Fig. 11 und 12 weisen die unteren, konisch erweiterten Teilbereiche 3e', 3f' eine relativ geringe axiale Länge auf. Der Winkel der konischen Erweiterung des jeweiligen unteren Teilbereiches 3e', 3f ist wesentlich größer als der Winkel des anschließenden, konisch erweiterten Teilbereiches 3e", 3f".

Die Scankörper 1a bis 1f nach den Fig. 7 bis 12 sind perspektivisch in stark vergrößertem Maßstab dargestellt.

## Patentansprüche

1. Scankörper zur Bestimmung einer Positionierung und Orientierung eines Dentalimplantates mit einem mit dem Implantat verbindbaren Fußteil (2), sowie mit einem dreidimensionalen Scanbereich (4), der für eine eindeutige Erfassung seiner Oberfläche aus verschiedenen Scanperspektiven relativ zu einer Mittellängsachse (D) des Scankörpers (1) eine unsymmetrische Geometrie aufweist, wobei zwischen dem Fußteil (2) und dem Scanbereich (4) ein vom Fußteil (2) und vom Scanbereich (4) abgesetzter Übergangsbereich (3) vorgesehen ist, wobei der Übergangsbereich (3) vom Fußteil (2) stufenförmig abgesetzt ist, und wobei der Scanbereich (4) eine Umfangsmantelfläche (5) aufweist, die rotationssymmetrisch zu der Mittellängsachse gestaltet ist, **dadurch gekennzeichnet, dass** die Umfangsmantelfläche (5) vier, gleichmäßig über den Umfang des Scanbereiches verteilt angeordnete Scankonturabschnitte (8 bis 11) aufweist, die radial über eine Außenkontur des Übergangsbereiches (3) hinaus nach außen abragen, und die einander jeweils paarweise diametral gegenüberliegen, wobei die Scankonturabschnitte jeweils unterschiedlich zueinander gestaltet sind.

2. Scankörper nach Anspruch 1, **dadurch gekennzeichnet, dass** der Scanbereich (4) an seiner Umfangsmantelfläche (5) mit - auf die Mittellängsachse bezogen - radial gegenüber der Umfangsmantelfläche (5) nach außen und nach innen versetzten Scankonturabschnitten (8, 9; 10, 11) versehen ist.

3. Scankörper nach Anspruch 1, **dadurch gekennzeichnet, dass** der Scanbereich (4) an seiner Umfangsmantelfläche (5) mit Scankonturabschnitten in Form von radial nach außen abragenden Scanprofilierungen (8, 9) und in Form von radial nach innen versetzten Scanflächen (10, 11) versehen ist.

4. Scankörper nach Anspruch 3, **dadurch gekennzeichnet, dass** die Scanprofilierungen (8, 9) und die Scanflächen (10, 11) Längsorientierungen aufweisen, die parallel zu der Mittellängsachse (D) des Scankörpers (1) verlaufen.

5. Scankörper nach Anspruch 1, **dadurch gekennzeichnet, dass** die Umfangsmantelfläche (5) zylindrisch koaxial zu der Mittellängsachse (D) gestaltet ist, wobei ein Zylinderdurchmesser größer ist als ein Durchmesser des Übergangsbereiches (3).

6. Scankörper nach Anspruch 3, **dadurch gekennzeichnet, dass** die Scanprofilierungen (8, 9) eine radial nach außen abragende Nockenform aufweisen.

7. Scankörper nach Anspruch 1, **dadurch gekennzeichnet, dass** eine dem Fußteil (2) gegenüberliegende Stirnseite (6) des Scanbereiches (4) eben gestaltet ist und in einer Radialebene zur Mittellängsachse (D) ausgerichtet ist.

8. Scankörper nach Anspruch 6, **dadurch gekennzeichnet, dass** die nockenförmigen Scanprofilierungen (8, 9) unterschiedliche axiale Längen und/oder Breiten und/oder Radialerstreckungen relativ zu einer Mittellängsachse aufweisen.

9. Scankörper nach Anspruch 3, **dadurch gekennzeichnet, dass** die Scanflächen (10, 11) eben gestaltet sind.

10. Scankörper nach Anspruch 9, **dadurch gekennzeichnet, dass** die beiden einander diametral gegenüberliegenden Scanflächen (10, 11) unterschiedliche axiale Längen und/oder Breiten aufweisen.

11. Scankörper nach wenigstens einem der vorhergehenden Ansprüche, **dadurch gekennzeichnet, dass** die in der Radialebene liegende Stirnseite (6) des Scanbereiches (4) mit einer Einschrauböffnung (12) zur Befestigung des Scankörpers (1) am Implantat oder einem mit dem Implantat verbundenen Adapter versehen ist.

12. Scankörper nach Anspruch 1 oder 5, **dadurch gekennzeichnet, dass** der Übergangsbereich (3) zylindrisch gestaltet ist.

13. Scankörper nach Anspruch 1 oder 5, **dadurch gekennzeichnet, dass** der Übergangsbereich (3a bis 3f) vom Fußteil (2) ausgehend zu dem Scanbereich (4) hin insbesondere konisch erweitert ist.

## Claims

1. Scanning body for determining a positioning and orientation of a dental implant, with a base part (2) connectable to the implant, and with a three-dimensional scanning portion (4) which has an asymmetric geometry relative to a central longitudinal axis (D) of the scanning body (1) for unambiguous detection of its surface from different scanning perspectives, wherein between the base part (2) and the scanning portion (4) a transition portion (3) is provided and offset from the base part (2) and from the scanning portion (4), wherein the transition portion (3) is offset from the base part (2) in a stepped manner, and wherein the scanning portion (4) has a circumferential lateral area (5) having a rotationally symmetric configuration in relation to the central longitudinal axis, **characterized in that** the circumferential lateral area (5) has four scanning contour sections (8 to 11) uniformly distributed over the circumference of the scanning portion, protruding radially outwards beyond an outer contour of the transition portion (3), and respectively arranged diametrically opposed in pairs, wherein the scanning contour sections each have a different design.

2. Scanning body according to claim 1, **characterized in that** the scanning portion (4) is provided, on the circumferential lateral area (5) thereof, with scanning contour sections (8, 9; 10, 11) offset radially outwards and inwards relative to the circumferential lateral area (5) - in relation to the central longitudinal axis.

3. Scanning body according to claim 1, **characterized in that** the scanning portion (4) is provided, on the circumferential lateral area (5) thereof, with scanning contour sections in the form of radially outwards protruding scanning profilings (8, 9) and in the form of radially inwards offset scanning surfaces (10, 11).

4. Scanning body according to claim 3, **characterized in that** the scanning profilings (8, 9) and the scanning surfaces (10, 11) have longitudinal orientations extending in parallel in relation to the central longitudinal axis (D) of the scanning body (1).

5. Scanning body according to claim 1, **characterized in that** the circumferential lateral area (5) has a cylindrical design coaxial in relation to the central longitudinal axis (D), wherein a cylinder diameter is greater than a diameter of the transition portion (3).

6. Scanning body according to claim 3, **characterized in that** the scanning profilings (8, 9) have a radially outwards protruding cam shape.

7. Scanning body according to claim 1, **characterized in that** an end side (6) of the scanning portion (4) located opposite the base part (2) has a planar design and is oriented in a radial plane in relation to the central longitudinal axis (D).

8. Scanning body according to claim 6, **characterized in that** the cam-shaped scanning profilings (8, 9) have different axial lengths and/or widths and/or radial extensions relative to a central longitudinal axis.

9. Scanning body according to claim 3, **characterized in that** the scanning surfaces (10, 11) have a planar design.

10. Scanning body according to claim 9, **characterized in that** the two diametrically opposed scanning surfaces (10, 11) have different axial lengths and/or widths.

11. Scanning body according to at least one of the preceding claims, **characterized in that** the end side (6) of the scanning portion (4) located in the radial plane is provided with a screw-in hole (12) for fastening the scanning body (1) to the implant or to an adapter connected to the implant.

12. Scanning body according to claim 1 or 5, **characterized in that** the transition portion (3) has a cylindrical design.

13. Scanning body according to claim 1 or 5, **characterized in that** the transition portion (3a to 3f) is, in particular, conically enlarged starting from the base part (2) towards the scanning portion (4).

## Revendications

1. Corps de balayage pour déterminer une position et une orientation d'un implant dentaire avec une partie de socle (2) raccordable à l'implant, ainsi qu'avec une zone de balayage tridimensionnelle (4) présentant une géométrie asymétrique par rapport à un axe longitudinal central (D) du corps de balayage (1) pour une détection univoque de sa surface selon des perspectives de balayage différentes, dans lequel entre la partie de socle (2) et la zone de balayage (4) une zone de transition (3) est prévue et décalée de la partie de socle (2) et de la zone de balayage (4), dans lequel la zone de transition (3) est décalée de la partie de socle (2) en forme de gradins, et dans lequel la zone de balayage (4) présente une surface d'enveloppe circonférentielle (5) conçue de manière à avoir symétrie de rotation par rapport à l'axe longitudinal central, **caractérisé en ce que** la surface d'enveloppe circonférentielle (5) comprend quatre sections de contour de balayage (8 à 11) réparties uniformément sur la circonférence de la zone de balayage, faisant saillie radialement vers l'extérieur au-delà d'un contour extérieur de la zone de transition (3), et respectivement agencées par paires en position opposée diamétrale, les sections de contour de balayage chacune présentant une configuration différente l'une à l'autre.

2. Corps de balayage selon la revendication 1, **caractérisé en ce que** la zone de balayage (4) sur sa surface d'enveloppe circonférentielle (5) est fournie de sections de contour de balayage (8, 9 ; 10, 11) - relatif à l'axe longitudinal central - radialement décalées vers extérieur et vers intérieur par rapport à la surface d'enveloppe circonférentielle (5).

3. Corps de balayage selon la revendication 1, **caractérisé en ce que** la zone de balayage (4) sur sa surface d'enveloppe circonférentielle (5) est fournie de sections de contour de balayage sous forme de profilages de balayage (8, 9) faisant saillie radialement vers l'extérieur et sous forme de surfaces de balayage (10, 11) faisant saillie radialement vers l'intérieur.

4. Corps de balayage selon la revendication 3, **caractérisé en ce que** les profilages de balayage (8, 9) et les surfaces de balayage (10, 11) présentent des orientations longitudinales s'étendant parallèlement par rapport à l'axe longitudinal central (D) du corps de balayage (1).

5. Corps de balayage selon la revendication 1, **caractérisé en ce que** la surface d'enveloppe circonférentielle (5) est conçue sous forme cylindrique coaxiale par rapport à l'axe longitudinal central (D), dans lequel un diamètre du cylindre est supérieur à un diamètre de la zone de transition (3).

6. Corps de balayage selon la revendication 3, **caractérisé en ce que** les profilages de balayage (8, 9) présentent une forme de came faisant saillie radialement vers l'extérieur.

7. Corps de balayage selon la revendication 1, **caractérisé en ce qu'**un front (6) de la zone de balayage (4) en position opposée par rapport à la partie de socle (2) est sous une forme plane et orienté dans un plan radial par rapport à l'axe longitudinal central (D).

8. Corps de balayage selon la revendication 6, **caractérisé en ce que** les profilages de balayage (8, 9) sous forme de came présentent des longueurs axiales et/ou largeurs et/ou extensions radiales différentes par rapport à un axe longitudinal central (D).

9. Corps de balayage selon la revendication 3, **caractérisé en ce que** les surfaces de balayage (10, 11) sont sous une forme plane.

10. Corps de balayage selon la revendication 9, **caractérisé en ce que** les deux surfaces de balayage (10, 11) en position opposée diamétrale l'une à l'autre présentent des longueurs et/ou largeurs axiales différentes.

11. Corps de balayage selon au moins une des revendications précédentes, **caractérisé en ce que** le front (6) de la zone de balayage (4) situé dans le plan radial est fourni d'un trou de vissage (12) pour la fixation du corps de balayage (1) sur l'implant ou sur un adapteur relié à l'implant.

12. Corps de balayage selon la revendication 1 ou 5, **caractérisé en ce que** la zone de transition (3) est sous une forme cylindrique.

13. Corps de balayage selon la revendication 1 ou 5, **caractérisé en ce que** la zone de transition (3a à 3f) à partir de la partie de socle (2) jusqu'à la zone de balayage (4) est en particulier élargie en forme conique.
